# EUROPEAN PATENT APPLICATION

(11) **EP 2 858 371 A1**
(43) Date of publication of application: **08.04.2015**
(21) Application number: 13832392.8
(22) Date of filing: 28.08.2013
(51) Int. Cl.: H04N 21/274

(54) **METHOD, TERMINAL AND DEVICE FOR CONTROLLING MEDIA CONTENT IN VIRTUAL ROOM**

(30) Priority: 31.08.2012 CN 201210319699
(71) Applicant: Huawei Device Co., Ltd., Longgang District Shenzhen Guangdong 518129 (CN)
(72) Inventor: LV, Xiaoqiang, Shenzhen Guangdong 518129 (CN); GAO, Wenmei, Shenzhen Guangdong 518129 (CN); FAN, Shunan, Shenzhen Guangdong 518129 (CN); WANG, Yahui, Shenzhen Guangdong 518129 (CN)
(74) Representative: Thun, Clemens
(86) International application number: PCT/CN2013/082450
(87) International publication number: WO 2014/032587

(57) **Abstract**

The present invention provides a method for controlling media content in a virtual room, a terminal, and a device, where the method includes: creating, by a terminal, a pause operation request, where the pause operation request includes a terminal identifier, an identifier of a VR, a start time of a pause operation, and pause operation information; sending, by the terminal, the pause operation request to a VR management unit, and enabling a terminal corresponding to the terminal identifier to perform a pause operation corresponding to the pause operation information; and receiving, by the terminal, program information after the pause operation ends, where the program information is sent by a CDN network as triggered by the VR management unit and corresponds to a pause operation period, where the program information corresponding to the pause operation period is obtained by the VR management unit according to the pause operation request; and the terminal identifier includes an identifier of the terminal that currently creates the pause operation request, or the terminal identifier further includes identifiers of one or more other terminals in a current VR. The method can resolve a problem in the prior art that main control permission in the VR is restricted to only one terminal.

## Description

### CROSS-REFERENCE TO RELATED APPLICATIONS

This application claims priority to Chinese Patent Application No. 201210319699.9, filed with the Chinese Patent Office on August 31, 2012, which is incorporated herein by reference in its entirety.

### TECHNICAL FIELD

The present invention relates to the communications field, and in particular, to a method for controlling media content in a virtual room, a terminal, and a device.

### BACKGROUND

The Internet Protocol Television (Internet Protocal Television, hereinafter referred to as IPTV) is a new technology that provides household with multiple interactive services, such as digital television, by using a broadband cable television network and that incorporates multiple technologies such as the Internet, multimedia, and entertainment. It adapts well to a current trend of a rapidly developing network, and makes the best and efficient use of network resources. The IPTV is characterized by flexible interaction. By virtue of an inherent advantage of symmetric interaction of an IP network, video information of the IPTV may be published on a network in multiple manners such as broadcast, multicast, and unicast. Multiple functions, such as an electronic menu, program recording, real-time fast-forward, rewind, terminal account and charging management, and programming, can be flexibly implemented. In addition, other Internet-based content services, such as online game, email, and electronic wealth management, may also be carried out.

A virtual room (Virtual Room, VR, virtual room, also referred to as virtual space) is a social service provided for IPTV users. All IPTV users may join a VR and then watch the same program. An IPTV user may apply for joining the VR or may be invited by another IPTV user to join the VR. For example, an IPTV user A creates a VR and invites his/her friends B and C to join the VR. Then a television program begins playing, and A, B, and C watch the television program together, and may comment on the program and synchronously share the comment with other IPTV users in the VR.

Currently, after a virtual room is allocated to an IPTV user to share a program with other IPTV users, only one user in the VR can have main control permission to change the currently played program in the VR. That is, in the VR, only the one user with the main control permission is allowed to perform control over the program, and other users have to passively accept the control over the program.

### SUMMARY

In view of this, embodiments of the present invention provide a method for controlling media content in a virtual room, a terminal, and a device to resolve a problem in the prior art that main control permission in a VR is restricted to only one terminal.

According to one aspect, an embodiment of the present invention provides a method for controlling media content in a virtual room, where the method includes:
creating, by a terminal, a pause operation request, where the pause operation request includes a terminal identifier, an identifier of a virtual room VR, a start time of a pause operation, and pause operation information, where the pause operation information is used to indicate that a requested operation is a pause operation;
sending, by the terminal, the pause operation request to a VR management unit, and enabling a terminal corresponding to the terminal identifier to perform a pause operation corresponding to the pause operation information; and
receiving, by the terminal, program information after the pause operation ends and playing the program information after the pause operation ends, where the program information is sent by a content delivery network (Content Delivery Network, hereinafter referred to as CDN network) as triggered by the VR management unit and corresponds to a pause operation period, where
the program information corresponding to the pause operation period is obtained by the VR management unit according to the pause operation request; and
the terminal identifier includes an identifier of the terminal that currently creates the pause operation request, or the terminal identifier includes the identifier of the terminal that currently creates the pause operation request and further includes identifiers of one or more other terminals in a current VR.

According to another aspect, an embodiment of the present invention provides a method for controlling media content in a virtual room, where the method includes:
receiving, by a virtual room VR management unit, a pause operation request sent by a terminal, where the pause operation request includes a terminal identifier, an identifier of a VR, a start time of a pause operation, and pause operation information, where the pause operation information is used to indicate that a requested operation is a pause operation;
parsing, by the VR management unit, the pause operation request, and creating a recording request according to the terminal identifier, the identifier of the VR, the start time of the pause operation, and recording description information, where the recording request includes the terminal identifier, a content identifier, the identifier of the VR, a content offset, and the recording description information;
sending, by the VR management unit, the recording request to a VR logic processing unit, so that the VR logic processing unit instructs a content delivery network CDN network to search for video content according to the content identifier and obtain program information corresponding to the recording description information according to the content offset; and
sending a recording stop request to the VR logic processing unit when the pause operation ends, where the recording stop request includes the identifier of the VR, the content identifier, and the terminal identifier, so that the VR logic processing unit instructs the CDN network to stop obtaining the program information corresponding to the recording description information and send the obtained program information to a terminal corresponding to the terminal identifier, where
the terminal identifier includes an identifier of the terminal that currently creates the pause operation request, or the terminal identifier includes the identifier of the terminal that currently creates the pause operation request and further includes identifiers of one or more other terminals in a current VR.

According to a third aspect, an embodiment of the present invention provides a method for controlling media content in a virtual room, where the method includes:
creating, by a terminal in a virtual room VR, an operation request, where the operation request includes a terminal identifier, an identifier of the VR, time point information of the operation request, and operation information, where the operation information is used to indicate an operation requested by the terminal; and
sending, by the terminal, the operation request to a VR management unit, to enable video information on a terminal corresponding to the terminal identifier to switch to program information corresponding to the time point information of the operation request; where
the terminal identifier includes an identifier of the terminal that currently creates the operation request, or the terminal identifier includes the identifier of the terminal that currently creates the operation request and further includes identifiers of one or more other terminals in a current VR.

According to a fourth aspect, an embodiment of the present invention provides a method for controlling media content in a virtual room, where the method includes:
receiving, by a virtual room VR management unit, an operation request sent by a terminal, where the operation request includes a terminal identifier, an identifier of a VR, time point information of the operation request, and operation information, where the operation information is used to indicate an operation requested by the terminal; and
sending, by the VR management unit, an operation execution request to a VR logic processing unit according to the operation request, where the operation execution request includes the identifier of the VR, the time point information of the operation request, first duration, the terminal identifier, and a content identifier, so that the VR logic processing unit sends a notification message to a content delivery network CDN network according to the operation execution request, and the CDN network delivers program information to a terminal corresponding to the terminal identifier according to the notification message, where the program information is program information within the first duration corresponding to the time point information of the operation request, where
the terminal identifier includes an identifier of the terminal that currently creates the operation request, or the terminal identifier includes the identifier of the terminal that currently creates the operation request and further includes identifiers of one or more other terminals in a current VR.

According to a fifth aspect, an embodiment of the present invention provides a terminal, where the terminal is located in a virtual room VR, and the terminal includes:
a creating unit, configured to create a pause operation request, where the pause operation request includes a terminal identifier, an identifier of a virtual room VR, a start time of a pause operation, and pause operation information, where the pause operation information is used to indicate that a requested operation is a pause operation;
a sending unit, configured to send the pause operation request to a VR management unit, and enable a terminal corresponding to the terminal identifier to perform a pause operation corresponding to the pause operation information; and
a receiving unit, configured to receive program information after the pause operation ends and play the program information after the pause operation ends, where the program information is sent by a content delivery network CDN network as triggered by the VR management unit and corresponds to a pause operation period, where
the program information corresponding to the pause operation period is obtained by the VR management unit according to the pause operation request; and
the terminal identifier includes an identifier of the terminal that currently creates the pause operation request, or the terminal identifier includes the identifier of the terminal that currently creates the pause operation request and further includes identifiers of one or more other terminals in a current VR.

According to a sixth aspect, an embodiment of the present invention provides a virtual room management device, where the management device includes:
a receiving unit, configured to receive a pause operation request sent by a terminal in a virtual room VR, where the pause operation request includes a terminal identifier, an identifier of the VR, a start time of a pause operation, and pause operation information, where the pause operation information is used to indicate that a requested operation is a pause operation;
a creating unit, configured to parse the pause operation request, and create a recording request according to the terminal identifier, the identifier of the VR, the start time of the pause operation, and recording description information, where the recording request includes the terminal identifier, a content identifier, the identifier of the VR, a content offset, and the recording description information; and
a sending unit, configured to send the recording request to a VR logic processing unit, so that the VR logic processing unit instructs a content delivery network CDN network to search for video content according to the content identifier and obtain program information corresponding to the recording description information according to the content offset; where
the sending unit is further configured to send a recording stop request to the VR logic processing unit when the pause operation ends, where the recording stop request includes the identifier of the VR, the content identifier, and the terminal identifier, so that the VR logic processing unit instructs the CDN network to stop obtaining the program information corresponding to the recording description information and send the obtained program information to a terminal corresponding to the terminal identifier, where
the terminal identifier includes an identifier of the terminal that currently creates the pause operation request, or the terminal identifier includes the identifier of the terminal that currently creates the pause operation request and further includes identifiers of one or more other terminals in a current VR.

According to a seventh aspect, an embodiment of the present invention provides a terminal, where the terminal is located in a virtual room VR, and the terminal includes:
a creating unit, configured to create an operation request, where the operation request includes a terminal identifier, an identifier of the VR, time point information of the operation request, and operation information, where the operation information is used to indicate an operation requested by the terminal; and
a sending unit, configured to send the operation request to a VR management unit, to enable video information on a terminal corresponding to the terminal identifier to switch to program information corresponding to the time point information of the operation request; where
the terminal identifier includes an identifier of the terminal that currently creates the operation request, or the terminal identifier includes the identifier of the terminal that currently creates the operation request and further includes identifiers of one or more other terminals in a current VR.

According to an eighth aspect, an embodiment of the present invention provides a virtual room management device, where the management device includes:
a receiving unit, configured to receive an operation request sent by a terminal in a virtual room VR, where the operation request includes a terminal identifier, an identifier of the virtual room VR, time point information of the operation request, and operation information, where the operation information is used to indicate an operation requested by the terminal; and
a sending unit, configured to send an operation execution request to a VR logic processing unit according to the operation request, where the operation execution request includes the identifier of the VR, the time point information of the operation request, first duration, the terminal identifier, and a content identifier, so that the VR logic processing unit sends a notification message to a content delivery network CDN network according to the operation execution request, and the CDN network delivers program information to a terminal corresponding to the terminal identifier according to the notification message, where the program information is program information within the first duration corresponding to the time point information of the operation request, where
the terminal identifier includes an identifier of the terminal that currently creates the operation request, or the terminal identifier includes the identifier of the terminal that currently creates the operation request and further includes identifiers of one or more other terminals in a current VR.

It can be learned from the foregoing technical solutions that, in a method for controlling media content in a virtual room, a terminal, and a device in the embodiments of the present invention, the terminal sends a pause operation request to a VR management unit, where the pause operation request includes identifiers of one or more terminals, an identifier of a VR, a start time of a pause operation, and pause operation information, and then the VR management unit instructs, according to the pause operation request, a VR logic processing unit and a CDN network to obtain program information corresponding to a pause operation period. Therefore, a purpose that all terminals in the VR control their respective video information is achieved, video information on other terminals is not affected, and a problem in the prior art that main control permission in the VR is restricted to only one terminal is resolved.

### BRIEF DESCRIPTION OF DRAWINGS

To describe technical solutions in the present invention more clearly, the following briefly describes accompanying drawings required in the embodiments. Apparently, the accompanying drawings in the following description show merely some embodiments of the present invention, and a person of ordinary skill in the art may still derive, from these accompanying drawings, other drawings that can also implement the technical solutions of the present invention without creative efforts.
FIG. 1 is a schematic flowchart of a method for controlling media content in a virtual room according to an embodiment of the present invention;
FIG. 2 is a schematic flowchart of a method for controlling media content in a virtual room according to another embodiment of the present invention;
FIG. 3 is a schematic flowchart of a method for controlling media content in a virtual room according to another embodiment of the present invention;
FIG. 4A and FIG. 4B is a schematic flowchart of a method for controlling media content in a virtual room according to another embodiment of the present invention;
FIG. 5 is a schematic flowchart of a method for controlling media content in a virtual room according to another embodiment of the present invention;
FIG. 6 is a schematic flowchart of a method for controlling media content in a virtual room according to another embodiment of the present invention;
FIG. 7 is a schematic flowchart of a method for controlling media content in a virtual room according to another embodiment of the present invention;
FIG. 8A and FIG. 8B are a schematic flowchart of a method for controlling media content in a virtual room according to another embodiment of the present invention;
FIG. 9 is a schematic structural diagram of a terminal according to another embodiment of the present invention;
FIG. 10 is a schematic structural diagram of a virtual room management device according to another embodiment of the present invention;
FIG. 11 is a schematic structural diagram of a terminal according to another embodiment of the present invention; and
FIG. 12 is a schematic structural diagram of a virtual room management device according to another embodiment of the present invention.

### DESCRIPTION OF EMBODIMENTS

To make objectives, technical solutions and merits of the present invention clearer, the following describes technical solutions of the present invention clearly and comprehensively with reference to accompanying drawings in the embodiments of the present invention. Apparently, each of the following embodiments is an embodiment of only a part of the present invention. Based on each of the following embodiments of the present invention, a person of ordinary skill in the art may equivalently change part or all of the technical features without creative efforts to obtain other embodiments that can resolve technical problems of the present invention and fulfill technical effects of the present invention. Apparently, such embodiments derived from the change shall in no way fall outside the scope disclosed in the present invention.

It should be noted that a user, an IPTV user, and the like mentioned in the present invention are a user equipment or also referred to as a user terminal used by the user. For ease of description, corresponding names are used in different parts of descriptions.

Currently, to overcome the foregoing disadvantage that only one terminal can control programs in a VR, main control permission is allocated to each terminal in the VR in the prior art. When any terminal in the VR sends a trick operation request to a system, the system authenticates the terminal that sends the request, and determines whether multiple terminals send the request. If multiple terminals send the request at the same time, it indicates that a "conflict" occurs. The system notifies the terminal that the conflict occurs, where the notification message is a message displayed on the screen of the terminal to instruct the user of the terminal how to handle the conflict. If the requests of multiple terminals conflict, the same notification message is displayed on the screen of each terminal. After the conflict is handled, the operation is synchronized to other terminals.

The foregoing technical solution allows all terminals in the VR to perform an operation on a program in the VR. However, all operations need to be synchronized to other terminals in the VR. Therefore, content displayed on all terminals in the VR is the same. This solution does not allow personal control to be performed over a video stream displayed on a terminal.

Neither of the foregoing two solutions allows the terminal to perform personal control over its own video stream. Consequently, all operations need to be synchronized to other terminals. The foregoing solutions restrict usage performance of the terminal in some specific scenarios such as scenarios in which the user of the terminal needs to review a played clip. or needs to pause watching the video because the user needs to temporarily leave the room.

A problem to be resolved by the present invention is to allow a terminal to perform an operation its own video information in a VR under specific conditions, where the operation is not necessarily synchronized to other terminals.

In the embodiments of the present invention, different operation requests may be created according to different operation information, and further, a VR management unit may perform, for a terminal, program information corresponding to different operation information according to the operation requests, so that a terminal can control video streams/video information of the terminal properly.

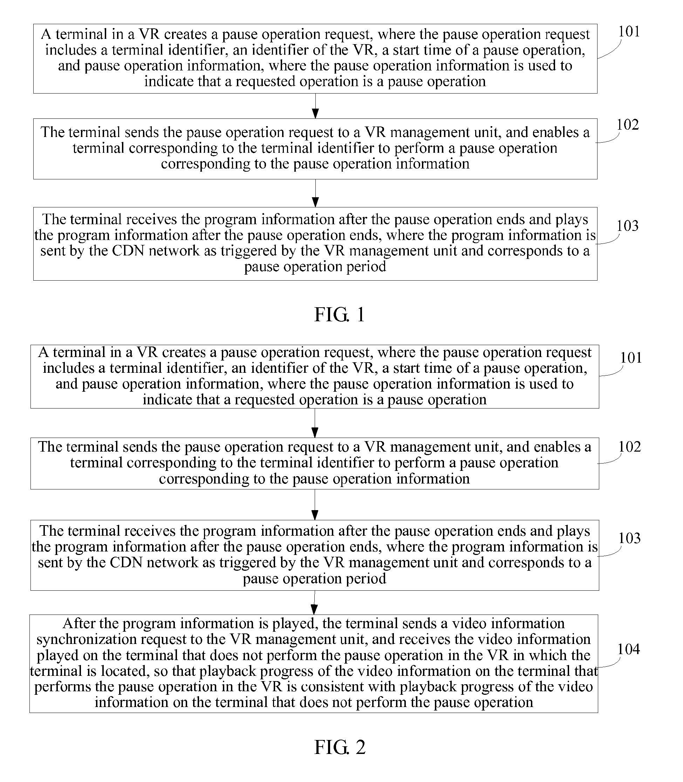

As shown in FIG. 1, FIG. 1 shows a schematic flowchart of a method for controlling media content in a virtual room according to an embodiment of the present invention. The method for controlling media content in a virtual room in this embodiment is described below.

101. A terminal in a VR creates a pause operation request, where the pause operation request includes a terminal identifier, an identifier of the VR, a start time of a pause operation, and pause operation information, where the pause operation information is used to indicate that a requested operation is a pause operation.

The terminal identifier in the pause operation request includes an identifier of the terminal that currently creates the pause operation request, or the terminal identifier in the pause operation request includes the identifier of the terminal that currently creates the pause operation request and identifiers of one or more other terminals in a current VR. The terminal identifier in the pause operation request does not necessarily include identifiers of all terminals in the VR.

For example, the VR includes four terminals a, b, c and d, where a is the terminal that creates the pause operation request. In this case, the terminal identifier in the pause operation request may include an identifier of a; or may include the identifier of a and an identifier of b; or may include the identifier of a, the identifier of b, and an identifier of c. The terminal identifier in the pause operation request does not necessarily include all identifiers of a, b, c, and d.

In an optional embodiment, the pause operation request may further include the number of terminals or information indicating the number of terminals. That is, the pause operation request in this embodiment may include: the number of terminals being 1, the identifier of the terminal that creates the pause operation request, the identifier of the VR, a start time of the pause operation, pause operation information, and the like; or, the pause operation request may include: the number of terminals being 2, identifiers of two terminals, the identifier of the VR, the start time of the pause operation, the pause operation information, and the like. Of the identifiers of the two terminals here, one is the identifier of the terminal that creates the pause operation request, and the other is an identifier of the other terminal that is located together with the foregoing terminal in the same VR. The number of the terminals may be one or more. When the number of the terminals is more than one, the number of the terminals does not necessarily include all terminals in the VR. The pause operation request does not necessarily include the number of all terminals in the VR and identifiers of all terminals in the VR.

Therefore, when the number of terminal is one, the following purpose can be fulfilled: each terminal in the VR can control its own video information, and video information of other terminals is not affected.

When the number of terminals is two or more, the following purpose can be fulfilled: one terminal in the VR controls some terminals in the VR, which improves service experience of the VR.

The terminal identifier may be an Internet Protocol (Internet Protocol, IP for short) address, and the start time of the pause operation may be a time point at which the terminal performs the pause operation.

102. The terminal sends the pause operation request to a VR management unit, and enables a terminal corresponding to the terminal identifier to perform a pause operation corresponding to the pause operation information.

It may be understood that, the pause operation request received by the VR management unit is used to enable the VR management unit to instruct, according to the terminal identifier, the identifier of the VR, the start time of the pause operation, and the pause operation information, the VR logic processing unit and a CDN network to obtain program information corresponding to a pause operation period.

103. The terminal receives the program information after the pause operation ends and plays the program information after the pause operation ends, where the program information is sent by the CDN network as triggered by the VR management unit and corresponds to a pause operation period.

In this step, the program information corresponding to the pause operation period is obtained by the VR management unit according to the pause operation request.

That the pause operation ends may mean that duration between the start time and an end time of the pause operation reaches preset pause duration in the VR management unit; or, that the pause operation ends may mean that the duration between the start time and the an end time of the pause operation reaches preset pause duration in the terminal that creates the pause operation request.

It should be noted that when the VR is created, the pause duration is set in the VR management unit in advance, or the pause duration is set in each terminal in the VR in advance. Therefore, a time segment of the pause operation performed by each terminal does not exceed the pause duration that is set at the time of creating the VR.

In one usage scenario, a timer is set in the terminal and the timer is used to monitor the pause duration of the pause operation.

For example, if that the pause operation ends in step 103 means that the duration between the start time and the end time of the pause operation reaches the preset pause duration in the terminal, accordingly, before step 103 in which the terminal receives the program information sent by the CDN network as triggered by the VR management unit and corresponding to the pause operation period, the method for controlling media content in a virtual room further includes step 103b that is not shown in the diagram:

103b. The terminal sends an end-of-pause-operation request to the VR management unit, where the end-of-pause-operation request includes end-of-pause-operation information or information about the end time of the pause operation, so that the VR management unit triggers, according to the end-of-pause-operation request, the CDN network to send the program information corresponding to the pause operation period to the terminal.

Further, after step 102 in which the terminal sends the pause operation request to a VR management unit, the method for controlling media content in a virtual room further includes step 103a that is not shown in the diagram:

103a. Start a timer that is preset in the terminal and used to monitor pause duration;
or, 103a, the terminal receives a reply message sent by the VR management unit according to the pause operation request, and, according to the reply message, the terminal starts an internally preset timer that is used to monitor pause duration.

Further, step 103b is performed when time monitored by the timer reaches the preset pause duration in the terminal.

103a and 103b here are both optional steps, which are not limited by this embodiment.

In another usage scenario, a timer is set in the VR management unit and the timer is used to monitor the preset pause duration in the VR management unit.

For example, after receiving the pause operation request, the VR management unit parses the pause operation request, creates a recording request according to the pause operation request and recording description information, sends the recording request to a VR logic processing unit, and further starts an internal timer used to monitor the pause duration, so that the VR logic processing unit instructs the content delivery network CDN network to search for video content according to a content identifier and obtain program information corresponding to the recording description information according to a content offset.

Optionally, when duration monitored by the timer reaches the pause duration, a recording stop request is sent to the VR logic processing unit, so that the VR logic processing unit instructs the CDN network to stop obtaining the program information corresponding to the recording description information and send the obtained program information to the terminal corresponding to the terminal identifier. After the program information is played on the terminal, the terminal may be enabled to directly receive video information played on the terminal that does not perform the pause operation in the VR in which the terminal is located, so that playback progress of the video information on the terminal that performs the pause operation in the VR is consistent with playback progress of the video information on the terminal that does not perform the pause operation.

It may be understood that, in an actual application, the timer in the terminal and the timer in the VR management unit do not perform monitoring simultaneously in the same scenario.

Preferably, as shown in FIG. 2, the method for controlling media content in a virtual room may further include the following step 104.

104. After the program information is played, the terminal sends a video information synchronization request to the VR management unit, and receives the video information played on the terminal that does not perform the pause operation in the VR in which the terminal is located, so that the playback progress of the video information on the terminal that performs the pause operation in the VR is consistent with the playback progress of the video information on the terminal that does not perform the pause operation.

There may be one or more terminal identifiers in this embodiment, but the terminal identifier does not necessarily include identifiers of all terminals in the VR. When the terminal identifier includes only the identifier of the terminal that creates the pause operation request, the method for controlling media content in a virtual room in this embodiment enables a terminal to control video information displayed on the terminal; therefore, video information of other terminals is not affected, and a problem in the prior art that main control permission in a VR is restricted to only one terminal is resolved.

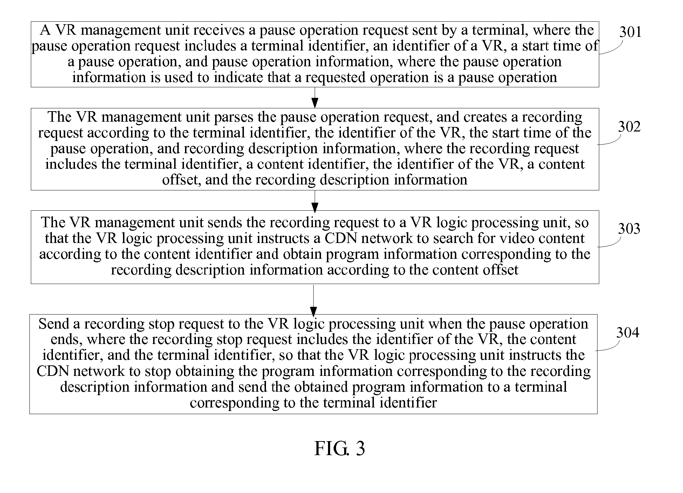

As shown in FIG. 3, FIG. 3 shows a schematic flowchart of a method for controlling media content in a virtual room according to an embodiment of the present invention. The method for controlling media content in a virtual room in this embodiment is described below.

301. A VR management unit receives a pause operation request sent by a terminal, where the pause operation request includes a terminal identifier, an identifier of a VR, a start time of a pause operation, and pause operation information, where the pause operation information is used to indicate that a requested operation is a pause operation.

Optionally, the pause operation request further includes the number of terminals.

It should be noted that the terminal identifier in the pause operation request includes an identifier of the terminal that currently creates the pause operation request, or the terminal identifier in the pause operation request includes the identifier of the terminal that currently creates the pause operation request and identifiers of one or more other terminals in a current VR.

The terminal identifier does not necessarily include identifiers of all terminals in the VR. That is, the terminal identifier includes identifiers of some terminals in the current VR.

302. The VR management unit parses the pause operation request, and creates a recording request according to the terminal identifier, the identifier of the VR, the start time of the pause operation, and recording description information, where the recording request includes the terminal identifier, a content identifier, the identifier of the VR, a content offset, and the recording description information.

For example, the content offset in this step may include a playback point of video information corresponding to the start time of the pause operation in the VR in which the terminal is located, where the playback point is used to indicate obtaining of a start location of the program information. It can also be understood that the playback point is used to indicate a recording start location of recorded program information of a CDN network.

Alternatively, in an optional implementation scenario, the content offset may include an amount of played video information corresponding to duration between the start time and an end time of the pause operation in the VR in which the terminal is located; or the content offset may include the amount of played video information corresponding to the duration between the start time and the end time of the pause operation in the VR in which the terminal is located, and an amount of played video information corresponding to a time segment occupied to play the program information.

The amount of played video information may be a percentage of playback progress of the video information, a video frame, playback time of a video, or the like, which is not limited by this embodiment, and this embodiment gives only an example.

The recording description information may be one or more of the following: video stream information, text content introduction, video content introduction, and the like.

In an implementation scenario, all the recording description information may be understood as preconfigured in the VR management unit and cannot be operated by the terminal. However, in a process of creating the VR, content such as the recording description information in the VR management unit may be set.

In another implementation scenario, the recording description information may be selected and determined by a terminal side. For example, after parsing the pause operation request, the VR management unit sends a recording description information selection message to the terminal, so that the terminal selects recording description information according to the selection message. Further, the VR management unit creates the recording request in step 302 according to the terminal identifier, the identifier of the VR, and the recording description information selected by the terminal.

In addition, in an actual application, the pause duration is generally less than the duration between the start time of the pause operation and a corresponding time point at which the terminal synchronizes the playback progress of the video information.

303. The VR management unit sends the recording request to a VR logic processing unit, so that the VR logic processing unit instructs a CDN network to search for video content according to the content identifier and obtain program information corresponding to the recording description information according to the content offset.

In other embodiments, the VR management unit forwards the recording request to the CDN network by using the VR logic processing unit, so that the CDN network searches for the video content according to the content identifier and obtains the program information corresponding to the recording description information according to the content offset.

The video content is video content shared in the VR.

It should be noted that the content identifier here may be obtained by the VR management unit according to the VR identifier. For example, the content identifier may be a video name or video code.

304. Send a recording stop request to the VR logic processing unit when the pause operation ends, where the recording stop request includes the identifier of the VR, the content identifier, and the terminal identifier, so that the VR logic processing unit instructs the CDN network to stop obtaining the program information corresponding to the recording description information and send the obtained program information to a terminal corresponding to the terminal identifier.

In an actual application, the VR logic processing unit may directly forward the recording stop request to the CDN network. Therefore, according to the recording stop request, the CDN network stops obtaining the program information corresponding to the recording description information and sends the obtained program information to the terminal corresponding to the terminal identifier.

For example, that the pause operation ends may mean that duration between the start time and the end time of the pause operation reaches preset pause duration in the VR management unit. It may be understood that, the pause duration here may be preconfigured in the VR management unit and cannot be operated by the terminal. However, in a process of creating the VR, the pause duration in the VR management unit may be set.

In addition, in an actual application, the pause duration is generally less than the duration between the start time of the pause operation and a corresponding time point at which the terminal synchronizes the playback progress of the video information.

If the terminal corresponding to the terminal identifier is only the terminal that creates the pause operation request, a terminal that performs the pause operation request can play program information recorded in the pause operation period, so that the terminal can listen to and/or watch audio and/or video programs without missing any program information.

If the terminals corresponding to the terminal identifier include the terminal that creates the pause operation request, and identifiers of one or more of other terminals in the same VR, then after performing the same pause operation, all the terminals corresponding to the terminal identifier can play the program information recorded in the pause operation period, so that the terminals can listen to and/or watch audio and/or video programs without missing any program information, which enhances experience of using the VR.

Especially, the method for controlling media content in a virtual room further includes the following step 305 that is not shown in the diagram:

305. After the program information is played, the VR management unit receives a video information synchronization request sent by the terminal, and instructs, according to the video information synchronization request, the terminal to synchronize video information played on a terminal that does not perform the pause operation in the VR in which the terminal is located, so that the playback progress of the video information on the terminal that performs the pause operation in the VR is consistent with the playback progress of the video information on the terminal that does not perform the pause operation.

It may be understood that, after the pause operation ends, the VR management unit may add the terminal into the VR again to keep consistency of the video information played on all the terminals in the VR.

In an application scenario, the pause duration is preset in the terminal. In this case, that the pause operation ends in the foregoing method may mean that the duration between the start time and the end time of the pause operation reaches the preset pause duration in the terminal.

In addition, after step 301, the method for controlling media content in a virtual room further includes the following step 302a:
after receiving the pause operation request, the VR management unit generally sends a reply message to the terminal in response to the pause operation request. For example, the reply message sent by the VR management unit to the terminal in response to the pause operation request may be 2000K, and the like.

Generally, the reply message may include one or more of the following: the terminal identifier, the identifier of the VR, the start time of the pause operation, the pause operation information, and the like.

302a. The terminal starts an internally preset timer after receiving a reply message, where the reply message is sent by the VR management unit according to the pause operation request and the timer is used to monitor preset pause duration in the terminal, and sends an end-of-pause-operation request to the VR management unit when the timer in the terminal expires (that is, duration monitored by the timer reaches the preset pause duration in the terminal).

Accordingly, step 304 of sending a recording stop request to the VR logic processing unit is specifically:
the VR management unit receives the end-of-pause-operation request sent by the terminal, and sends the recording stop request to the VR logic processing unit according to the end-of-pause-operation request.
the end-of-pause-operation request may include end-of-pause-operation information or information about an end time of the pause operation.

In a preferred application scenario, the method for controlling media content in a virtual room may further include the following step 302b that is not shown in the diagram:

302b. The VR management unit publishes a first message on a social networking service (Social Networking Services, SNS for short) network, where the first message is used to instruct the terminal corresponding to the terminal identifier to perform the pause operation.

For example, the first message may include the pause operation information and the terminal identifier so that other terminals in the VR can learn a video state of the terminal by viewing the social network.

In a preferred scenario, the method for controlling media content in a virtual room includes both step 302a and step 302b, and in this case, step 302b may be performed before step 302a or after step 302a.

Therefore, other terminals in the VR can learn an action of a specific terminal, which enhances experience of the VR and enriches application functions of the VR.

In a third possible implementation scenario, pause duration is preset in the VR management unit. In this case, after the VR management unit in step 303 sends the recording request to the VR logic processing unit, the method for controlling media content in a virtual room further includes the following step 303a that is not shown in the diagram:

303a. The VR management unit receives a reply message sent by the VR logic processing unit according to the received recording request, and the VR management unit starts an internally preset timer that is used to monitor the preset pause duration in the VR management unit, and performs the foregoing step 304 when the timer in the VR management unit expires (that is, duration monitored by the timer reaches the preset pause duration in the VR management unit).

It may be understood that, the foregoing step 302a, step 302b, and step 303a are all optional steps, and in an actual application, step 302a and step 303a dot not occur in the same implementation scenario.

It can be learned from the foregoing embodiment that a method for controlling media content in a virtual room in this embodiment enables a terminal to control video information displayed on the terminal; therefore, video information of other terminals is not affected, and a problem in the prior art that main control permission in a VR is restricted to only one terminal is resolved.

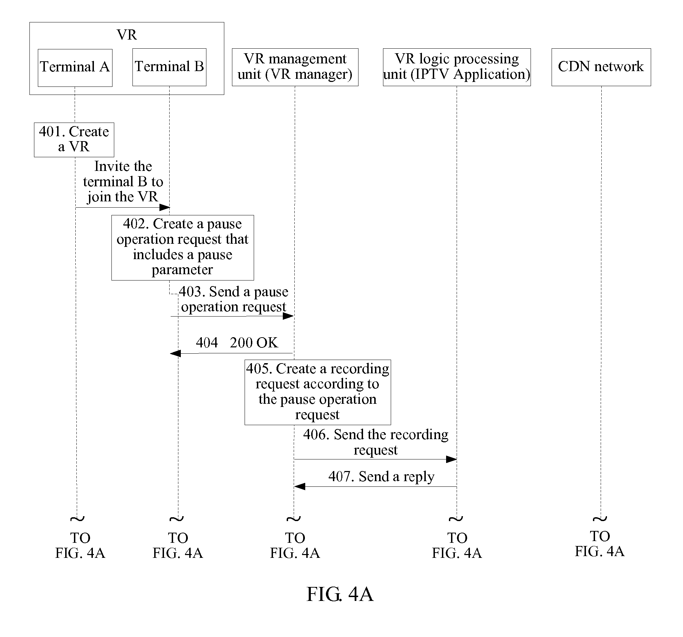

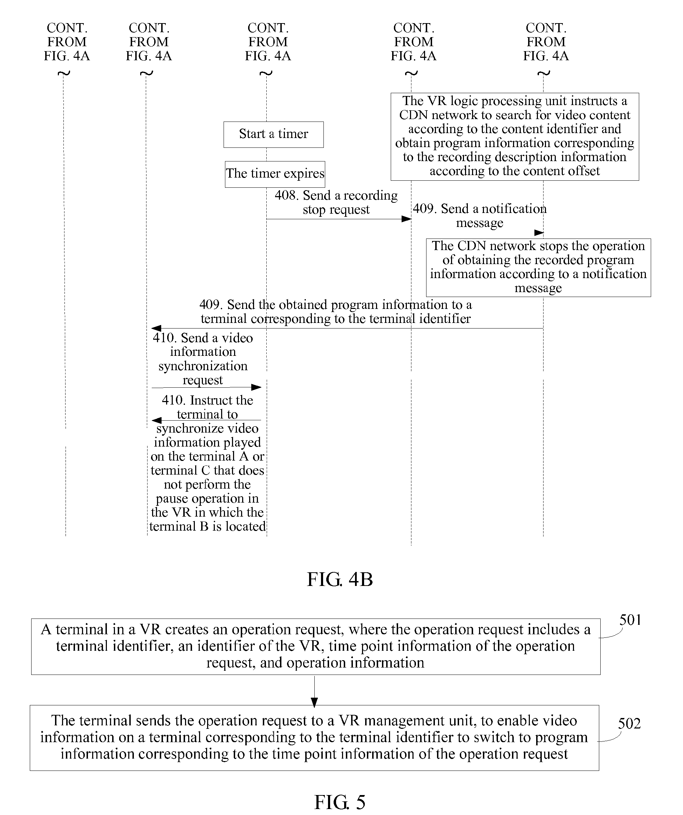

As shown in FIG. 4A and FIG. 4B, FIG. 4A and FIG. 4B show a schematic flowchart of a method for controlling media content in a virtual room according to an embodiment of the present invention. The method for controlling media content in a virtual room in this embodiment is described below.

The VR in the following example includes five terminals: terminal A, terminal B, terminal C, terminal D, and terminal E.

401. The terminal A creates a VR, and selects specific content (such as the video of The Promise) for playing in the VR, and invites the terminal B to join the VR.

It should be noted that when the VR is created, pause duration (such as 1 minute and 50 seconds) of a pause operation performed by any terminal in the VR is already set in a VR management unit, and recording description information in a pause operation period is set in the VR management unit. For example, the recording description information is text content introduction. From the VR management unit, it can be learned that it takes 10s to play the text content introduction.

In an actual process of watching The Promise video, the terminal B needs to pause the watched video information at a playback time point 00:10:10, and the pause does not need to be synchronized to other terminals in the VR.

402. The terminal B creates a pause operation request, where the pause operation request includes a pause parameter, information indicating that the number of terminals is one, an identifier of the terminal B, an identifier of the VR, a start time of the pause operation, and the like.

The pause operation request here may be an HTTP request. For example, the pause parameter is specifically: a value of a request_type parameter is pause. The information indicating that the number of terminals is one may be expressed by only_me, and therefore, only_me may be specifically a parameter, where the parameter indicates that operation_object includes only the terminal B.

The start time of the pause operation is 00:10:10.

In an actual application, the value of the request_type parameter may be expressed by pause, fast-forward, rewind, forward, back, change channel, or the like. When the value of the request_type parameter is pause (which is referred to as a pause parameter in this embodiment), the operation information may be pause operation information.

The value of the operation_object parameter may be expressed by information indicative of the number of terminals. When the value of the operation_object parameter is only_me, it indicates that the number of terminals is one. In this case, the terminal identifier in the pause operation request created by the terminal B includes only the identifier of the terminal B.

The request_type parameter and the operation_object parameter here are newly defined parameters.

403. The terminal B sends the pause operation request to a VR management unit; and the VR management unit parses the received pause operation request and obtains the pause parameter, the information indicating that the number of terminals is one, the identifier of the terminal B, the identifier of the VR, the start time of the pause operation, and the like.

404. The VR management unit sends a 2000K reply message to the terminal B. Preferably, the reply message may include the pause parameter, the identifier of the VR, the information indicating that the number of terminals is one, the start time of the pause operation, and the like.

Step 404 is an optional step in practical implementation.

405. After parsing the pause operation request, the VR management unit creates a recording request according to the terminal identifier, the identifier of the VR, the start time of the pause operation, and recording description information, where the recording request may include the terminal identifier, a content identifier, the identifier of the VR, a content offset, and the recording description information.

406. The VR management unit sends the recording request to a VR logic processing unit, so that the VR logic processing unit instructs a CDN network to search for video content according to the content identifier and obtain program information corresponding to the recording description information according to the content offset.

For example, the content offset may include a playback point of video information corresponding to the start time of the pause operation in the VR in which the terminal is located, where the playback point is used to instruct the CDN network to obtain a start location of the program information.

In this embodiment, the CDN network obtains the program information corresponding to the recording description information, which is covered in the prior art and is not detailed here.

407. The VR management unit receives the reply message sent by the VR logic processing unit according to the received recording request, and the VR management unit starts an internally preset timer that is used to monitor preset pause duration in the VR.

Step 407 is an optional step in practical implementation.

408. Send a recording stop request to the VR logic processing unit when duration between the start time and an end time of the pause operation reaches the preset pause duration in the VR management unit (that is, when duration monitored in the timer reaches the preset pause duration), where the recording stop request may include the identifier of the VR, the content identifier, and/or the terminal identifier; or the recording stop request may further include end-of-pause-operation information or information about the end time of the pause operation.

It should be noted that, while the terminal B implements the pause operation, other terminals (such as terminal A, terminal C, and terminal E) in the VR still perform normal playback. The preset first pause duration may be 1 minute and 50 seconds.

When the pause operation of the terminal B ends, the time point in the normal playback progress of other terminals (such as terminal A, terminal C, and terminal E) in the VR is 00:11:50.

409. After receiving the recording stop request, the VR logic processing unit sends a notification message to the CDN network according to the recording stop request, so that the CDN network stops, according to the notification message, the operation of obtaining the recorded program information, and sends the obtained program information to the terminal B corresponding to the identifier of the terminal B.

The program information here may be the text content introduction, and it takes 10s to play the text content introduction. Generally, the program information recorded by the CDN network may be a little more than the program information corresponding to the pause duration (that is, the video information corresponding to a time segment occupied to play the program information may be recorded) to prevent omission of video information corresponding to the time segment occupied to play the program information.

For example, content that may be included in the text content introduction is text content introduction of video information between 00:10:00 and 00:12:00.

410. The terminal B may send a video information synchronization request to the VR management unit after the program information is played.

According to the video synchronization request, the VR management unit instructs the terminal B to synchronize video information played on the terminal A or the terminal C that does not perform the pause operation in the VR in which the terminal B is located, so that playback progress of the video information on the terminal B is consistent with playback progress of the video information on the terminal A and the terminal C.

Step 410 is an optional step in practical implementation.

A method for controlling media content in a virtual room allows a terminal to perform an operation on only its own video streams, thereby satisfying a requirement of the terminal for personalized operation.

As shown in FIG. 5, FIG. 5 shows a schematic flowchart of a method for controlling media content in a virtual room according to an embodiment of the present invention. The method for controlling media content in a virtual room in this embodiment is described below.

501. A terminal in a VR creates an operation request, where the operation request includes a terminal identifier, an identifier of the VR, time point information of the operation request, and operation information.

The operation information in this embodiment is used to indicate an operation requested by the terminal. The operation information may be operation information such as forward, back, rewind or fast-forward.

In addition, in other embodiments, the operation request may further include the number of terminals or information indicating the number of terminals.

It should be noted that, the time point information of the operation request, which is included in the operation request, may include a start time of the operation request, an end time of the operation request, and the like.

The terminal identifier may include an identifier of the terminal that currently creates the operation request, or the terminal identifier may include the identifier of the terminal that currently creates the operation request and further includes identifiers of one or more other terminals in a current VR.

The operation request in this embodiment may be an HTTP request, and this embodiment imposes no limitation on a specific operation request.

502. The terminal sends the operation request to a VR management unit, to enable video information on a terminal corresponding to the terminal identifier switch to program information corresponding to the time point information of the operation request.

Further, in another application scenario, step 502 may also be: The terminal sends the operation request to the VR management unit, and therefore, after the VR management unit requests, according to the operation information, a metadata storage unit to confirm whether an operation corresponding to the operation information can be performed, the terminal receives an acknowledgment execution reply sent by the VR management unit according to the operation request; in addition, video information on a terminal corresponding to the terminal identifier is switched to program information corresponding to the time point information of the operation request.

In this embodiment, the program information is program information delivered by the CDN network. Optionally, the program information may also be program information delivered by the CDN network and temporarily stored on the terminal. That is, a time segment between a start time point and an end time point of the operation request is very small. In this case, the program information may also be video stream information temporarily stored on the terminal.

Playback duration of the program information is preset first duration.

If the current playback progress of the video information of a terminal A in the VR is 00:15:10 and the preset first duration is 2 minutes and 10 seconds, the terminal A creates a back operation request, where time point information of the back operation request includes: a start time point of the back operation request is 00:15:10, and an end time point of the back operation is 00:10:10. In this case, video information on the terminal A corresponding to the terminal identifier is switched to program information corresponding to the end time point 00:10:10 of the back operation request.

For example, the terminal A begins to play the program information whose start point is 00:10:10 and whose end point is 00:12:20.

That is, the end time of the operation request may be specifically the start time point of playing subsequent program information.

For example, the program information may be one or more of the following content: video stream information, text content introduction, video content introduction, and the like.

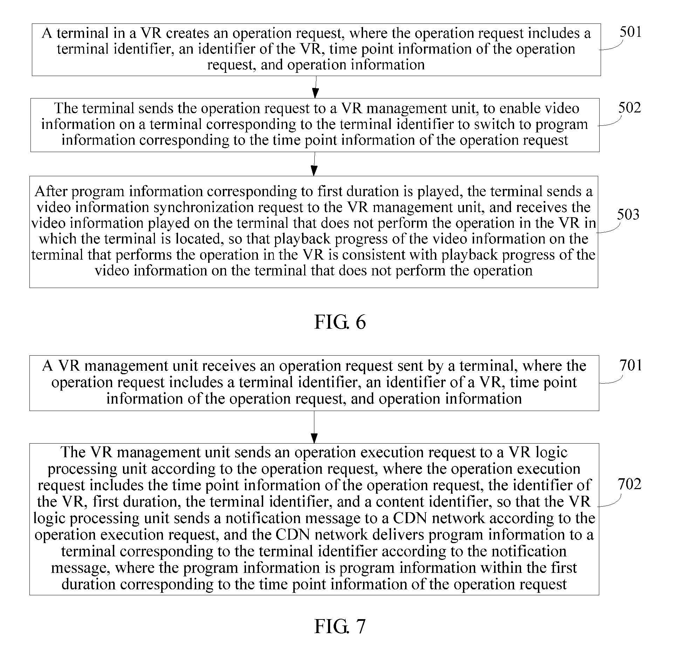

Further, as shown in FIG. 6, the method for controlling media content in a virtual room further includes the following step 503.

503. The terminal sends a video information synchronization request to the VR management unit after program information corresponding to first duration is played; and
receives video information played on a terminal that does not perform the operation in the VR in which the terminal is located, so that playback progress of the video information on the terminal that performs the operation in the VR is consistent with playback progress of the video information on the terminal that does not perform the operation.

Certainly, in an actual application, a timer used to monitor the first duration may be set in the terminal. If duration monitored by the timer reaches the first duration corresponding to the program information, the terminal sends the video information synchronization request to the VR management unit; or, in other embodiments, the terminal may use other manners to learn that the program information is played.

In a possible implementation scenario, for example, at the time of creating a VR, the first duration corresponding to the operation request is preset in the VR management unit, and the timer for monitoring the first duration is set in the VR. Therefore, when the terminal starts playing the program information, the timer in the VR starts monitoring. When the duration monitored by the timer in the VR reaches the preset first duration, the VR management unit can keep consistency between playback progress of the video information on the terminal that performs the operation in the VR and playback progress of the video information on the terminal that does not perform the operation.

A method for controlling media content in a virtual room allows a terminal to perform an operation on only its own video streams, thereby satisfying a requirement of the terminal for personalized operation.

As shown in FIG. 7, FIG. 7 shows a schematic flowchart of a method for controlling media content in a virtual room according to an embodiment of the present invention. The method for controlling media content in a virtual room in this embodiment is described below.

701. A VR management unit receives an operation request sent by a terminal, where the operation request includes a terminal identifier, an identifier of a VR, time point information of the operation request, and operation information.

The operation information in this embodiment is used to indicate an operation requested by the terminal. The operation information may be operation information such as forward, back, rewind or fast-forward.

The terminal identifier may include an identifier of the terminal that currently creates the operation request, or the terminal identifier may include the identifier of the terminal that currently creates the operation request and identifiers of one or more other terminals in a current VR.

702. The VR management unit sends an operation execution request to a VR logic processing unit according to the operation request, where the operation execution request includes time point information of the operation request, the identifier of the VR, first duration, the terminal identifier, and a content identifier, so that the VR logic processing unit sends a notification message to a CDN network according to the operation execution request, and the CDN network delivers program information to a terminal corresponding to the terminal identifier according to the notification message, where the program information is program information within the first duration corresponding to the time point information of the operation request.

In another practicable scenario, step 702 may include the following:

702'. According to the operation information in the operation request, the VR management unit requests a metadata storage unit to determine whether the operation information can be performed.

If the metadata storage unit determines that the operation information can be performed, the VR management unit receives an acknowledgment reply sent by the metadata storage unit to indicate that the operation information can be performed.

Accordingly, the VR management unit sends an operation execution request to a VR logic processing unit according to the operation request, where the operation execution request includes time point information of the operation request, the identifier of the VR, first duration, the terminal identifier, and a content identifier, so that the VR logic processing unit sends a notification message to a CDN network according to the operation execution request, and the CDN network delivers program information to a terminal corresponding to the terminal identifier according to the notification message, where the program information is program information within the first duration corresponding to the time point information of the operation request.

Preferably, if the metadata storage unit determines that the operation information can be performed, the VR management unit receives an acknowledgment reply sent by the metadata storage unit to indicate that the operation information can be performed, and sends an acknowledgment execution reply to the terminal according to the acknowledgment reply.

In this embodiment, the program information is program information delivered by the CDN network, and the playback duration of the program information is the first duration configured at the time of creating the VR, that is, a preset first duration.

The program information here may be one or more of the following: video stream information, text content introduction, video content introduction, and the like.

In another optional implementation scenario, the method for controlling media content in a virtual room further includes the following step 703 that is not shown in the FIG. 7.

703. After the program information corresponding to the first duration is played, receive a video information synchronization request sent by the terminal; and
send video information to the terminal according to the video information synchronization request, where the video information is played on a terminal that does not perform the operation in the VR, so that playback progress of the video information on the terminal that performs the operation in the VR is consistent with playback progress of the video information on the terminal that does not perform the operation.

Certainly, in an actual application, a timer used to monitor the first duration may be set in the terminal. If duration monitored by the timer reaches the first duration corresponding to the program information, the VR management unit may receive a video information synchronization request sent by the terminal; or, in other embodiments, the terminal may use other manners to learn whether the playing of the program information is complete, and further send a video information synchronization request to the VR management unit.

In a possible implementation scenario, for example, at the time of creating a VR, the first duration corresponding to the operation request is preset in the VR management unit, and the timer for monitoring the first duration is set in the VR. Therefore, when the terminal starts playing the program information, the timer in the VR starts monitoring. When the duration monitored by the timer in the VR reaches the preset first duration, the VR management unit can keep consistency between playback progress of the video information on the terminal that performs the operation in the VR and playback progress of the video information on the terminal that does not perform the operation.

In another possible implementation scenario, after step 702' in which the acknowledgment execution reply is sent to the terminal according to the acknowledgment reply, the method for controlling media content in a virtual room may further include the following step 703a that is not shown in FIG. 7:

703a. The VR management unit publishes a second message on a social networking service SNS network, where the second message is used to instruct a terminal corresponding to the terminal identifier to perform an operation corresponding to the operation information.

Optionally, the second message includes the operation information and the terminal identifier.

In this way, the step 703a enables other terminals in the same VR to learn actions of the terminal.

The method for controlling media content in a virtual room allows a terminal to perform an operation on only its own video content in a proper range, thereby satisfying a requirement of the terminal for personalized operation.

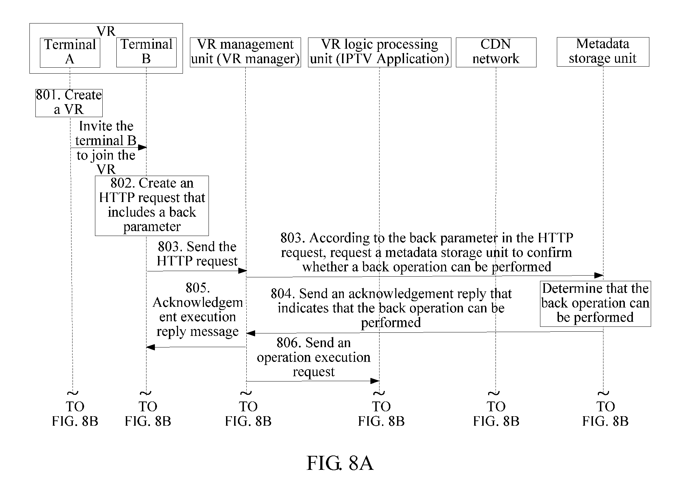

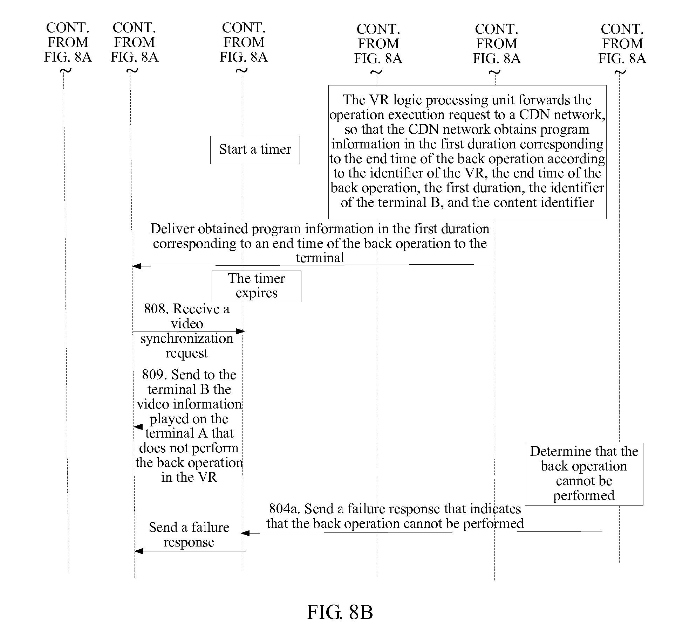

As shown in FIG. 8A and FIG. 8B, FIG. 8A and FIG. 8B show a schematic flowchart of a method for controlling media content in a virtual room according to an embodiment of the present invention. The method for controlling media content in a virtual room in this embodiment is described below.

A VR in the following example includes four terminals: terminal A, terminal B, terminal C, and terminal D.

801. The terminal A creates a VR, and selects specific content (such as The Promise video) for playing in the VR, and invites the terminal B to join the VR.

It should be noted that when the VR is created, first duration (such as 1 minute and 10 seconds) for any one terminal in the VR to perform the operation request (a back operation request, a fast-forward operation request, or a rewind operation request) has been set in the VR management unit.

In an actual process of watching the played video of The Promise, the terminal B needs to skip back the watched video information at a playback time point 00:10:10, that is, the terminal B needs to view program information whose end time point is 00:08:10 in the operation request, and the back operation does not need to be synchronized to other terminals in the VR. The end time point of the operation request is a start time point of playing the program information.

802. The terminal B creates an HTTP request, where the HTTP request includes a back parameter, information indicating that the number of terminals is one, an identifier of the terminal B, an identifier of the VR, a start time of the back operation, an end time of the back operation, and the like.

The back parameter here is used to indicate the back operation requested by the terminal.

For example, the back parameter is specifically: a value of a request_type parameter is fast backward. The information indicating that the number of terminals is one may be expressed by only_me, and therefore, only_me may be specifically a parameter, where the parameter indicates that operation_object includes only the terminal B.

The start time of the back operation is 00:10:10, and the end time of the back operation is 00:08:10.

In an actual application, the value of the request_type parameter may be expressed by pause, fast-forward, rewind, forward, back, change channel, or the like. When the value of the request_type parameter is fast backward(which is referred to as the back parameter in this embodiment).

The value of the operation_object parameter may be expressed by information indicative of the number of terminals. When the value of the operation_object parameter is only_me, it may indicate that the number of terminals is one. In this case, the terminal identifier in the pause operation request created by the terminal B includes only the identifier of the terminal B.

The request_type parameter and the operation_object parameter here are newly defined parameters.

803. The terminal B sends the HTTP request to a VR management unit, and the VR management unit parses the HTTP request, and the VR management unit requests, according to the back parameter in the HTTP request, a metadata storage unit to confirm whether the back operation can be performed. If the back operation can be performed, the following step 804 is performed; otherwise, the following step 804a is performed.

The step 803 may be an optional step in an actual implementation process.

804. If the metadata storage unit determines that the back operation corresponding to the back parameter in the HTTP request can be performed, the metadata storage unit sends to the VR management unit an acknowledgment reply that indicates that the back operation corresponding to the back parameter can be performed.

The step 804 may be an optional step in an actual implementation process.

805. The VR management unit sends an acknowledgment execution reply message to the terminal according to the received acknowledgment reply that indicates that the back operation corresponding to the back parameter can be performed.

The step 805 may be an optional step in an actual implementation process.

806. The VR management unit sends an operation execution request to the VR logic processing unit, where the operation execution request includes the identifier of the VR, the end time of the back operation, first duration, the identifier of the terminal B, and a content identifier.

807. The VR logic processing unit forwards the operation execution request to a CDN network, so that the CDN network delivers program information in the first duration corresponding to the end time of the back operation to the terminal according to the identifier of the VR, the end time of the back operation, the first duration, the identifier of the terminal B, and the content identifier.

It should be noted that if each terminal in the VR plays a broadcast program, the terminal leaves an existing broadcast channel in this case.

808. After the program information corresponding to the first duration is played, receive a video information synchronization request sent by the terminal B.

809. Send video information to the terminal B according to the video information synchronization request, where the video information is played on a terminal (such as terminal A and terminal C) that does not perform the back operation in the VR, so that playback progress of the video information on the terminal B that performs the back operation in the VR is consistent with playback progress of the video information on the terminal A that does not perform the back operation.

The step 808 and step 809 may be optional steps in an actual implementation process.

Specially, if a broadcast channel is viewed in the VR in which the terminal is located, then after the program information is played, the VR logic processing unit needs to use the VR management unit to instruct the terminal to join a specified channel again.

804a. If the metadata storage unit determines that the back operation corresponding to the back parameter in the HTTP request cannot be performed, the metadata storage unit sends a failure response to the VR management unit by using the VR logic processing unit. Accordingly, the VR management unit sends the failure response to the terminal.

If the terminal B performs a fast-forward operation request corresponding to a fast-forward operation, the step is consistent with the foregoing step, and an end time of the fast-forward operation may be 00:12:30. In this case, the end time of the fast-forward operation may be a start time point of the program information.

In addition, if the terminal B performs a rewind operation request corresponding to a rewind operation, the step is consistent with the foregoing step. To give a detailed description in this embodiment, back and rewind are described in parallel. In some application scenarios, rewind and back may be consistent operations.

Further, if the terminal B performs a change operation request corresponding to a change-channel operation, the step is consistent with the foregoing step, but a difference is that the HTTP request in step 802 includes a change-channel parameter, the number of terminals being one, the identifier of the terminal B, the identifier of the VR, a start time of changing the channel, and the like.

The change-channel parameter here includes a channel pre-changed by the terminal B. Further, the change-channel parameter is also used to indicate a change-channel operation to be performed by a terminal corresponding to the terminal identifier.

The operation execution request sent by the VR management unit to the VR logic processing unit in step 806 includes the identifier of the VR, a start time of changing a channel, the first duration, the identifier of the terminal B, and a content identifier corresponding to the channel pre-changed by the terminal B.

Accordingly, step 807 may be: The VR logic processing unit forwards the operation execution request to a CDN network, so that the CDN network delivers program information in the first duration corresponding to the start time of changing the channel to the terminal according to the identifier of the VR, the start time of changing the channel, the first duration, the identifier of the terminal B, and the content identifier corresponding to the channel pre-changed by the terminal B. It should be noted that if the program information here is program information in the channel pre-changed by the terminal B, and the first duration is playback duration of the program information.

The foregoing method fulfills the following purpose: after a terminal sends an operation (fast-forward, rewind or change channel) request with respect to watched video information, a VR management unit may negotiate, according to the operation request, with a VR logic processing unit and a CDN network to perform the operation request of the terminal; and, after a timer expires, the VR logic processing unit synchronizes video information of the terminal to normal playback progress.

A method for controlling media content in a virtual room allows a terminal to perform an operation on only its own video content, thereby satisfying a requirement of the terminal for personalized operation.

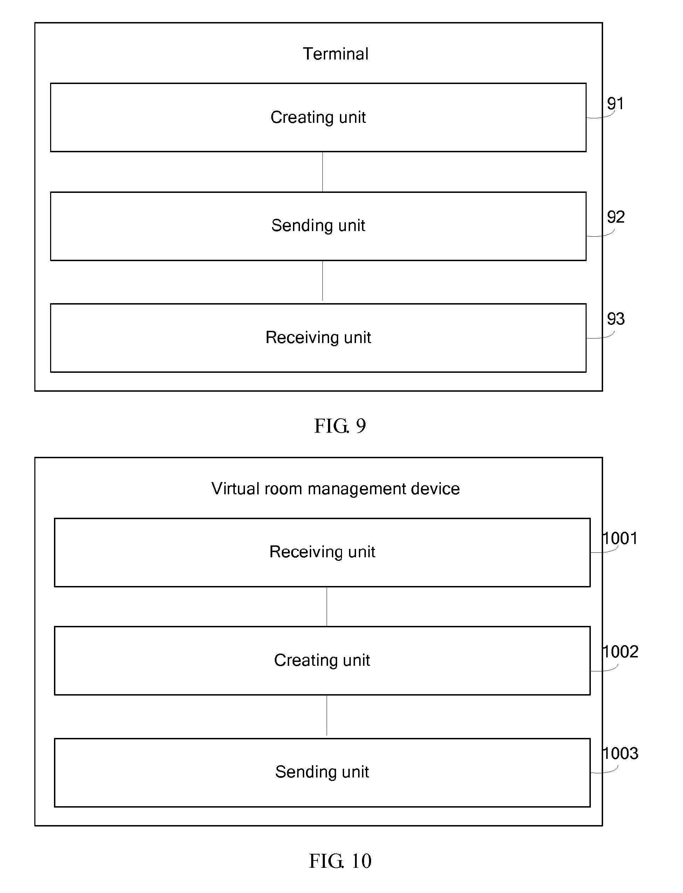

According to another aspect of the present invention, the present invention further provides a terminal, where the terminal is located in a VR. As shown in FIG. 9, the terminal includes a creating unit 91, a sending unit 92, and a receiving unit 93.

The creating unit 91 is configured to create a pause operation request, where the pause operation request includes a terminal identifier, an identifier of the VR, a start time of a pause operation, and pause operation information, where the pause operation information is used to indicate that a requested operation is a pause operation.

The sending unit 92 is configured to send the pause operation request to a VR management unit, and enable a terminal corresponding to the terminal identifier to perform a pause operation corresponding to the pause operation information.

The receiving unit 93 is configured to receive program information after the pause operation ends and play the program information after the pause operation ends, where the program information is sent by a content delivery network CDN network as triggered by the VR management unit and corresponds to a pause operation period.

The program information corresponding to the pause operation period is obtained by the VR management unit according to the pause operation request.

The terminal identifier includes an identifier of the terminal that currently creates the pause operation request, or the terminal identifier includes the identifier of the terminal that currently creates the pause operation request and further includes identifiers of one or more other terminals in a current VR.

Optionally, the sending unit 92 is further configured to send a video information synchronization request to the VR management unit after the program information is played.

Accordingly, the receiving unit 93 is further configured to receive video information played on a terminal that does not perform the pause operation in the VR in which the terminal is located, so that playback progress of the video information on the terminal that performs the pause operation in the VR is consistent with playback progress of the video information on the terminal that does not perform the pause operation.

In this embodiment, that the pause operation ends means that duration between the start time and an end time of the pause operation reaches preset pause duration in the VR management unit.

Alternatively, that the pause operation ends means that duration between the start time and an end time of the pause operation reaches preset pause duration in the terminal.

In this case, the sending unit is further configured to send an end-of-pause-operation request to the VR management unit, so that the VR management unit triggers, according to the end-of-pause-operation request, the CDN network to send the program information corresponding to the pause operation period to the terminal.

A terminal can control a video stream displayed on the terminal in a VR, thereby satisfying a requirement of the terminal for personalized operation.

According to another aspect of the present invention, the present invention further provides a virtual room management device. As shown in FIG. 10, the virtual room management device includes a receiving unit 1001, a creating unit 1002, and a sending unit 1003.

The receiving unit 1001 is configured to receive a pause operation request sent by a terminal in a VR, where the pause operation request includes a terminal identifier, an identifier of the VR, a start time of a pause operation, and pause operation information, where the pause operation information is used to indicate that a requested operation is a pause operation.

The creating unit 1002 is configured to parse the pause operation request, and create a recording request according to the terminal identifier, the identifier of the VR, the start time of the pause operation, and recording description information, where the recording request includes the terminal identifier, a content identifier, the identifier of the VR, a content offset, and the recording description information.

The sending unit 1003 is configured to send the recording request to a VR logic processing unit, so that the VR logic processing unit instructs a content delivery network CDN network to search for video content according to the content identifier and obtain program information corresponding to the recording description information according to the content offset.

The sending unit 1003 is further configured to send a recording stop request to the VR logic processing unit when the pause operation ends, where the recording stop request includes the identifier of the VR, the content identifier, and the terminal identifier, so that the VR logic processing unit instructs the CDN network to stop obtaining the program information corresponding to the recording description information and send the obtained program information to a terminal corresponding to the terminal identifier.

The terminal identifier includes an identifier of the terminal that currently creates the pause operation request, or the terminal identifier includes the identifier of the terminal that currently creates the pause operation request and further includes identifiers of one or more other terminals in a current VR.

In an implementation scenario, the receiving unit 1001 is further configured to: after the program information is played, receive a video information synchronization request sent by the terminal, and the sending unit 1003 is further configured to instruct, according to the video information synchronization request, the terminal to synchronize the video information played on a terminal that does not perform the pause operation in the VR in which the terminal is located, so that the playback progress of the video information on the terminal that performs the pause operation in the VR is consistent with the playback progress of the video information on the terminal that does not perform the pause operation.

Further, the virtual room management device further includes a publishing unit, where the publishing unit is configured to publish a first message on a social networking service SNS network, where the first message is used to instruct the terminal corresponding to the terminal identifier to perform the pause operation. Preferably, the first message includes the pause operation information and the terminal identifier.

That the pause operation ends means that duration between the start time and an end time of the pause operation reaches preset pause duration in the VR management unit.

The content offset may include a playback point of video information corresponding to the start time of the pause operation in the VR in which the terminal is located, where the playback point is used to indicate obtaining of a start location of the program information, or, in other embodiments, an amount of video information played by the terminal in duration between the start time and the end time of the pause operation in the VR, and an amount of video information played in a time segment occupied to play the program information.

The recording description information is one or more of the following: video stream information, text content introduction, and video content introduction.

A virtual room management device enables a terminal to control a video stream displayed on the terminal in a VR, thereby satisfying a requirement of the terminal for personalized operation.

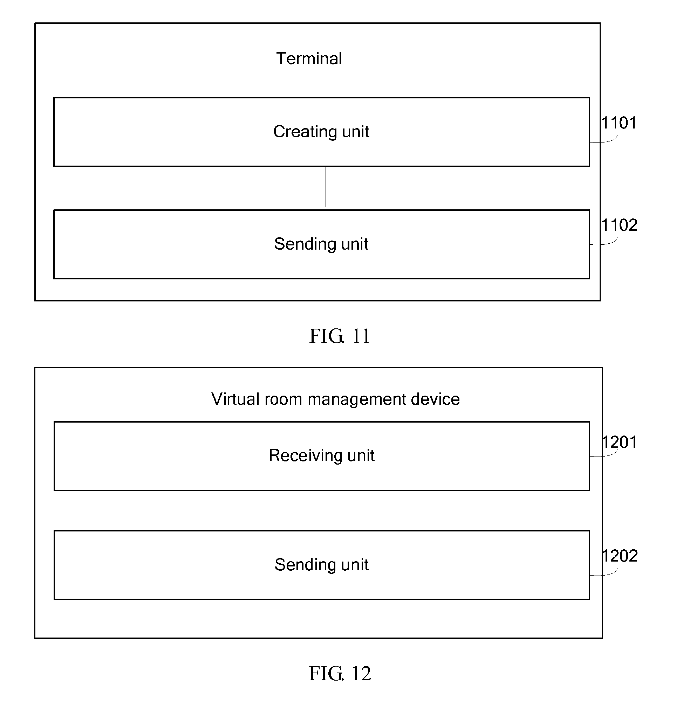

According to another aspect of the present invention, the present invention further provides a terminal, where the terminal is located in a virtual room. As shown in FIG. 11, the terminal includes a creating unit 1101 and a sending unit 1102.

The creating unit 1101 is configured to create an operation request, where the operation request includes a terminal identifier, an identifier of the VR, time point information of the operation request, and operation information, where the operation information is used to indicate an operation requested by the terminal.

The sending unit 1102 is configured to send the operation request to a VR management unit, to enable video information on a terminal corresponding to the terminal identifier to switch to program information corresponding to the time point information of the operation request.

The terminal identifier includes an identifier of the terminal that currently creates the operation request, or the terminal identifier includes the identifier of the terminal that currently creates the operation request and further includes identifiers of one or more other terminals in a current VR.

The program information is program information delivered by a CDN network, and playback duration of the program information is preset first duration. The program information is one or more of the following: video stream information, text content introduction, and video content introduction.

The sending unit is further configured to send a video information synchronization request to the VR management unit after program information corresponding to first duration is played; and

The terminal may further include a receiving unit, configured to receive video information played on a terminal that does not perform the operation in the VR in which the terminal is located, so that playback progress of the video information on the terminal that performs the operation in the VR is consistent with playback progress of the video information on the terminal that does not perform the operation.

The operation information may be fast-forward, rewind, forward or back operation information.

A terminal can control a video stream displayed on the terminal in a VR, thereby satisfying a requirement of the terminal for personalized operation.

According to another aspect of the present invention, the present invention further provides a virtual room management device. As shown in FIG. 12, the virtual room management device includes a receiving unit 1201 and a sending unit 1202.

The receiving unit 1201 is configured to receive an operation request sent by a terminal in a virtual room, where the operation request includes a terminal identifier, an identifier of the VR, time point information of the operation request, and operation information, where the operation information is used to indicate an operation requested by the terminal.

The sending unit 1202 is configured to send an operation execution request to a VR logic processing unit according to the operation request, where the operation execution request includes the identifier of the VR, the time point information of the operation request, first duration, the terminal identifier, and a content identifier, so that the VR logic processing unit sends a notification message to a content delivery network CDN network according to the operation execution request, and the CDN network delivers program information to a terminal corresponding to the terminal identifier according to the notification message, where the program information is program information within the first duration corresponding to the time point information of the operation request.

The terminal identifier includes an identifier of the terminal that currently creates the operation request, or the terminal identifier includes the identifier of the terminal that currently creates the operation request and further includes identifiers of one or more other terminals in a current VR.

In an optional implementation scenario, the virtual room management device further includes a determining unit 1203 that is not shown in the diagram, where the determining unit 1203 is configured to request, according to the operation information in the operation request, a metadata storage unit to determine whether the operation information can be performed.

If the metadata storage unit determines that the operation information can be performed, the receiving unit 1201 is further configured to receive an acknowledgment reply sent by the metadata storage unit to indicate that the operation information can be performed, and the sending unit 1202 is further configured to send an acknowledgment execution reply to the terminal according to the acknowledgment reply.

In this embodiment, the program information is program information delivered by a CDN network, and playback duration of the program information is preset first duration.

Further, the program information is one or more of the following: video stream information, text content introduction, and video content introduction.

In a preferred implementation scenario, the receiving unit 1201 is further configured to: after the program information corresponding to the first duration is played, receive a video information synchronization request sent by the terminal; and
the sending unit 1202 is further configured to send video information to the terminal according to the video information synchronization request, where the video information is played on a terminal that does not perform the operation in the VR, so that playback progress of the video information on the terminal that performs the operation in the VR is consistent with playback progress of the video information on the terminal that does not perform the operation.

The operation information is fast-forward, rewind, forward or back operation information.

Optionally, the virtual room management device may further include a publishing unit, where the publishing unit publishes a second message on a social networking service SNS network, where the second message is used to instruct the terminal corresponding to the terminal identifier to perform the operation corresponding to the operation information. Preferably, the second message includes the operation information and the terminal identifier.

A virtual room management device enables a terminal to control a video information displayed on the terminal in a VR, thereby satisfying a requirement of the terminal for personalized operation.

In addition, in an actual application, the terminal may include a processor and a memory, where the processor is configured to implement functions of the creating unit 91, the sending unit 92, and the receiving unit 93 in FIG. 9; and the memory is configured to store the preset first duration, the start time of the pause operation, and the like.

Alternatively, in another embodiment, the processor of the terminal is configured to implement functions of the creating unit 1101 and the sending unit 1102 in FIG. 11; and the memory is configured to store the preset first duration, the operation information, and the time point information of the operation request, and the like.

Currently, in an actual application, the virtual room management device in an actual application may include a processor and a memory, where the processor is configured to implement functions of the receiving unit 1001, the creating unit 1002 and the sending unit 1003 in FIG. 10; and the memory is configured to store the preset first duration, the start time of the pause operation, the recording description information, and the like.

Alternatively, in another embodiment, the processor of the virtual management device is configured to implement functions of the receiving unit 1201 and the sending unit 1202, and is further configured to implement functions of the determining unit and the publishing unit; and the memory is configured to store the preset first duration, the operation information, and the time point information of the operation request, and the like.

The foregoing embodiments merely describe the terminal and the virtual room management device by using examples, and the embodiments impose no limitation on a specific structure of the terminal and the virtual room management device.

A person of ordinary skill in the art may understand that, all or part of the steps for implementing the foregoing method embodiments may be implemented by a program instructing relevant hardware. The program may be stored in a computer readable storage medium. When the program is performed, the steps that include the foregoing method embodiments are performed. The storage medium includes various media capable of storing program code, such as a ROM, a RAM, a magnetic disk, or an optical disc.

Finally, it should be noted that the foregoing embodiments are merely intended for describing the technical solutions of the present invention instead of limiting the present invention. Although the present invention is described in detail with reference to the foregoing embodiments, a person of ordinary skill in the art should understand that modifications may still be made to the technical solutions described in the foregoing embodiments or equivalent replacements may be made to some or all technical features thereof without departing from the scope of the technical solutions of the embodiments of the present invention.

## Claims

1. A method for controlling media content in a virtual room, comprising:
creating, by a terminal in a virtual room VR, a pause operation request, wherein the pause operation request comprises a terminal identifier, an identifier of the VR, a start time of a pause operation, and pause operation information, wherein the pause operation information is used to indicate that a requested operation is a pause operation;
sending, by the terminal, the pause operation request to a VR management unit, and enabling a terminal corresponding to the terminal identifier to perform a pause operation corresponding to the pause operation information; and
receiving, by the terminal, program information after the pause operation ends and playing the program information after the pause operation ends, wherein the program information is sent by a content delivery network CDN network as triggered by the VR management unit and corresponds to a pause operation period, wherein
the program information corresponding to the pause operation period is obtained by the VR management unit according to the pause operation request; and
the terminal identifier comprises an identifier of the terminal that currently creates the pause operation request, or the terminal identifier comprises the identifier of the terminal that currently creates the pause operation request and further comprises identifiers of one or more other terminals in a current VR.

2. The method according to claim 1, wherein that the pause operation ends means that duration between the start time and an end time of the pause operation reaches preset pause duration in the VR management unit.

3. The method according to claim 1, wherein that the pause operation ends means that duration between the start time and an end time of the pause operation reaches preset pause duration in the terminal.

4. The method according to claim 3, wherein, before the step of receiving, by the terminal, program information that is sent by a CDN network as triggered by the VR management unit and corresponds to a pause operation period, the method further comprises:
sending, by the terminal, an end-of-pause-operation request to the VR management unit, wherein the end-of-pause-operation request comprises end-of-pause-operation information or information about the end time of the pause operation, so that the VR management unit triggers, according to the end-of-pause-operation request, the CDN network to send the program information corresponding to the pause operation period to the terminal.

5. The method according to any one of claims 1 to 4, further comprising:
sending, by the terminal, a video information synchronization request to the VR management unit after the program information is played; and
receiving video information played on a terminal that does not perform the pause operation in the VR in which the terminal is located, so that playback progress of the video information on the terminal that performs the pause operation in the VR is consistent with playback progress of the video information on the terminal that does not perform the pause operation.

6. A method for controlling media content in a virtual room, comprising:
receiving, by a virtual room VR management unit, a pause operation request sent by a terminal, wherein the pause operation request comprises a terminal identifier, an identifier of a VR, a start time of a pause operation, and pause operation information, wherein the pause operation information is used to indicate that a requested operation is a pause operation;
parsing, by the VR management unit, the pause operation request, and creating a recording request according to the terminal identifier, the identifier of the VR, the start time of the pause operation, and recording description information, wherein the recording request comprises the terminal identifier, a content identifier, the identifier of the VR, a content offset, and the recording description information;
sending, by the VR management unit, the recording request to a VR logic processing unit, so that the VR logic processing unit instructs a content delivery network CDN network to search for video content according to the content identifier and obtain program information corresponding to the recording description information according to the content offset; and
sending a recording stop request to the VR logic processing unit when the pause operation ends, wherein the recording stop request comprises the identifier of the VR, the content identifier, and the terminal identifier, so that the VR logic processing unit instructs the CDN network to stop obtaining the program information corresponding to the recording description information and send the obtained program information to a terminal corresponding to the terminal identifier, wherein
the terminal identifier comprises an identifier of the terminal that currently creates the pause operation request, or the terminal identifier comprises the identifier of the terminal that currently creates the pause operation request and further comprises identifiers of one or more other terminals in a current VR.

7. The method according to claim 6, further comprising:
receiving, by the VR management unit, a video information synchronization request sent by the terminal after the program information is played; and
instructing, according to the video information synchronization request, the terminal to synchronize video information played on a terminal that does not perform the pause operation in the VR in which the terminal is located, so that playback progress of the video information on the terminal that performs the pause operation in the VR is consistent with playback progress of the video information on the terminal that does not perform the pause operation.

8. The method according to claim 6 or 7, further comprising:
starting, by the terminal, an internally preset timer after receiving a reply message, wherein the reply message is sent by the VR management unit according to the pause operation request and the timer is used to monitor preset pause duration, and sending an end-of-pause-operation request to the VR management unit when duration monitored by the timer in the terminal reaches the preset pause duration in the terminal, wherein
the sending a recording stop request to the VR logic processing unit is specifically:
sending the recording stop request to the VR logic processing unit according to the end-of-pause-operation request, wherein
the end-of-pause-operation request comprises end-of-pause-operation information or information about an end time of the pause operation.

9. The method according to any one of claims 6 to 8, wherein, after the step of parsing, by the VR management unit, the pause operation request, the method further comprises:
publishing, by the VR management unit, a first message on a social networking service SNS network, wherein the first message is used to instruct thea terminal corresponding to the terminal identifier to perform thea pause operation.

10. The method according to any one of claims 6 to 9, wherein that the pause operation ends means that duration between the start time and anthe end time of the pause operation reaches the preset pause duration in the VR management unit.

11. The method according to any one of claims 6 to 10, wherein the content offset comprises:
a playback point of video information corresponding to the start time of the pause operation in the VR in which the terminal is located, wherein the playback point is used to indicate obtaining of a start location of the program information.

12. The method according to any one of claims 6 to 11, wherein the recording description information is one or more of the following:
video stream information, text content introduction, and video content introduction.

13. A method for controlling media content in a virtual room, comprising:
creating, by a terminal in a virtual room VR, an operation request, wherein the operation request comprises a terminal identifier, an identifier of the VR, time point information of the operation request, and operation information, wherein the operation information is used to indicate an operation requested by the terminal; and
sending, by the terminal, the operation request to a VR management unit, to enable video information on a terminal corresponding to the terminal identifier to switch to program information corresponding to the time point information of the operation request; wherein
the terminal identifier comprises an identifier of the terminal that currently creates the operation request, or the terminal identifier comprises the identifier of the terminal that currently creates the operation request and further comprises identifiers of one or more other terminals in a current VR.

14. The method according to claim 13, wherein the program information is program information delivered from a delivery network CDN network; and
playback duration of the program information is preset first duration.

15. The method according to claim 13 or 14, wherein the program information is one or more of the following: video stream information, text content introduction, and video content introduction.

16. The method according to any one of claims 13 to 15, further comprising:
sending, by the terminal, a video information synchronization request to the VR management unit after the program information corresponding to the first duration is played; and
receiving video information played on a terminal that does not perform the operation in the VR in which the terminal is located, so that playback progress of the video information on the terminal that performs the operation in the VR is consistent with playback progress of the video information on the terminal that does not perform the operation.

17. The method according to any one of claims 13 to 16, wherein the operation information is fast-forward, rewind, forward or back operation information.

18. A method for controlling media content in a virtual room, comprising:
receiving, by a virtual room VR management unit, an operation request sent by a terminal, wherein the operation request comprises a terminal identifier, an identifier of a VR, time point information of the operation request, and operation information, wherein the operation information is used to indicate an operation requested by the terminal; and
sending, by the VR management unit, an operation execution request to a VR logic processing unit according to the operation request, wherein the operation execution request comprises the identifier of the VR, the time point information of the operation request, first duration, the terminal identifier, and a content identifier, so that the VR logic processing unit sends a notification message to a content delivery network CDN network according to the operation execution request, and the CDN network delivers program information to a terminal corresponding to the terminal identifier according to the notification message, wherein the program information is program information within the first duration corresponding to the time point information of the operation request, wherein
the terminal identifier comprises an identifier of the terminal that currently creates the operation request, or the terminal identifier comprises the identifier of the terminal that currently creates the operation request and further comprises identifiers of one or more other terminals in a current VR.

19. The method according to claim 18, wherein, after the step of receiving, by a VR management unit, an operation request sent by a terminal, the method further comprises:
requesting, by the VR management unit according to the operation information in the operation request, a metadata storage unit to determine whether the operation information can be performed; and
if the metadata storage unit determines that the operation information can be performed, receiving, by the VR management unit, an acknowledgment reply sent by the metadata storage unit to indicate that the operation information can be performed.

20. The method according to claim 18 or 19, wherein the program information is the program information delivered by athe CDN network; and
playback duration of the program information is preset first duration.

21. The method according to any one of claims 18 to 20, wherein the program information is one or more of the following: video stream information, text content introduction, and video content introduction.

22. The method according to any one of claims 18 to 21, further comprising:
after the program information corresponding to the first duration is played, receiving a video information synchronization request sent by the terminal; and
sending video information to the terminal according to the video information synchronization request, wherein the video information is played on a terminal that does not perform the operation in the VR, so that playback progress of the video information on the terminal that performs the operation in the VR is consistent with playback progress of the video information on the terminal that does not perform the operation.

23. The method according to any one of claims 18 to 22, wherein the operation information is fast-forward, rewind, forward or back operation information.

24. The method according to any one of claims 18 to 23, wherein, after the step of sending an performing-acknowledgment execution reply to the terminal according to the acknowledgment reply, the method further comprises:
publishing, by the VR management unit, a second message on a social networking service SNS network, wherein the second message is used to instruct athe terminal corresponding to the terminal identifier to perform an operation corresponding to the operation information.

25. A terminal, wherein the terminal is located in a virtual room VR, and the terminal comprises:
a creating unit, configured to create a pause operation request, wherein the pause operation request comprises a terminal identifier, an identifier of the VR, a start time of a pause operation, and pause operation information, wherein the pause operation information is used to indicate that a requested operation is a pause operation;
a sending unit, configured to send the pause operation request to a VR management unit, and enable a terminal corresponding to the terminal identifier to perform a pause operation corresponding to the pause operation information; and
a receiving unit, configured to receive program information after the pause operation ends and play the program information after the pause operation ends, wherein the program information is sent by a content delivery network CDN network as triggered by the VR management unit and corresponds to a pause operation period, wherein
the program information corresponding to the pause operation period is obtained by the VR management unit according to the pause operation request; and
the terminal identifier comprises an identifier of the terminal that currently creates the pause operation request, or the terminal identifier comprises the identifier of the terminal that currently creates the pause operation request and further comprises identifiers of one or more other terminals in a current VR.

26. The terminal according to claim 25, wherein the sending unit is further configured to:
send a video information synchronization request to the VR management unit after the program information is played; and
accordingly, the receiving unit is further configured to:
receive video information played on a terminal that does not perform the pause operation in the VR in which the terminal is located, so that playback progress of the video information on the terminal that performs the pause operation in the VR is consistent with playback progress of the video information on the terminal that does not perform the pause operation.

27. A virtual room management device, comprising:
a receiving unit, configured to receive a pause operation request sent by a terminal in a virtual room VR, wherein the pause operation request comprises a terminal identifier, an identifier of the VR, a start time of a pause operation, and pause operation information, wherein the pause operation information is used to indicate that a requested operation is a pause operation;
a creating unit, configured to parse the pause operation request, and create a recording request according to the terminal identifier, the identifier of the VR, the start time of the pause operation, and recording description information, wherein the recording request comprises the terminal identifier, a content identifier, the identifier of the VR, a content offset, and the recording description information; and
a sending unit, configured to send the recording request to a VR logic processing unit, so that the VR logic processing unit instructs a content delivery network CDN network to search for video content according to the content identifier and obtain program information corresponding to the recording description information according to the content offset, wherein
the sending unit is further configured to send a recording stop request to the VR logic processing unit when the pause operation ends, wherein the recording stop request comprises the identifier of the VR, the content identifier, and the terminal identifier, so that the VR logic processing unit instructs the CDN network to stop obtaining the program information corresponding to the recording description information and send the obtained program information to a terminal corresponding to the terminal identifier, wherein
the terminal identifier comprises an identifier of the terminal that currently creates the pause operation request, or the terminal identifier comprises the identifier of the terminal that currently creates the pause operation request and further comprises identifiers of one or more other terminals in a current VR.

28. The virtual room device according to claim 27, further comprising:
a publishing unit, configured to publish a first message on a social networking service SNS network, wherein the first message is used to instruct thea terminal corresponding to the terminal identifier to perform thea pause operation.

29. A terminal, wherein the terminal is located in a virtual room VR, and the terminal comprises:
a creating unit, configured to create an operation request, wherein the operation request comprises a terminal identifier, an identifier of the VR, time point information of the operation request, and operation information, wherein the operation information is used to indicate an operation requested by the terminal; and
a sending unit, configured to send the operation request to a VR management unit, to enable video information on a terminal corresponding to the terminal identifier to switch to program information corresponding to the time point information of the operation request; wherein
the terminal identifier comprises an identifier of the terminal that currently creates the operation request, or the terminal identifier comprises the identifier of the terminal that currently creates the operation request and further comprises identifiers of one or more other terminals in a current VR.

30. The terminal according to claim 29, wherein the sending unit is further configured to:
send a video information synchronization request to the VR management unit after the program information corresponding to the the first duration is played; and
accordingly, the terminal further comprises a receiving unit, and
the receiving unit is configured to receive video information played on a terminal that does not perform the operation in the VR in which the terminal is located, so that playback progress of the video information on the terminal that performs the operation in the VR is consistent with playback progress of the video information on the terminal that does not perform the operation.

31. A virtual room management device, comprising:
a receiving unit, configured to receive an operation request sent by a terminal in a virtual room VR, wherein the operation request comprises a terminal identifier, an identifier of the VR, time point information of the operation request, and operation information, wherein the operation information is used to indicate an operation requested by the terminal; and
a sending unit, configured to send an operation execution request to a VR logic processing unit according to the operation request, wherein the operation execution request comprises the identifier of the VR, the time point information of the operation request, first duration, the terminal identifier, and a content identifier, so that the VR logic processing unit sends a notification message to a content delivery network CDN network according to the operation execution request, and the CDN network delivers program information to a terminal corresponding to the terminal identifier according to the notification message, wherein the program information is program information within the first duration corresponding to the time point information of the operation request, wherein
the terminal identifier comprises an identifier of the terminal that currently creates the operation request, or the terminal identifier comprises the identifier of the terminal that currently creates the operation request and further comprises identifiers of one or more other terminals in a current VR.

32. The virtual room management device according to claim 31, further comprising:
a determining unit, configured to request, according to the operation information in the operation request, a metadata storage unit to determine whether the operation information can be performed; and
if the metadata storage unit determines that the operation information can be performed, the receiving unit is further configured to receive an acknowledgment reply sent by the metadata storage unit to indicate that the operation information can be performed, and the sending unit is further configured to send an performing-acknowledgment execution reply to the terminal according to the acknowledgment reply.
